# EUROPEAN PATENT APPLICATION

(11) **EP 3 196 409 A2**
(43) Date of publication of application: **26.07.2017**
(21) Application number: 17151589.3
(22) Date of filing: 16.01.2017
(51) Int. Cl.: F01D 5/14, F01D 9/04

(54) **TURBINE COMPRESSOR VANE**

(30) Priority: 18.01.2016 PL 41583516
(71) Applicant: General Electric Company, Schenectady, NY 12345 (US)
(72) Inventor: MOECKEL, Curtis William, West Chester, OH 3N112 (US); WOOD, Peter John, Cincinnati, OH 45215 (US); FALK, Eric Andrew, Cincinnati, OH 45215 (US); BRZOZOWSKI, Jacek Michal, 05-515 Nowa Wola (PL); TARNOWSKI, Andrzej Tomasz, 01-864 Warsaw (PL)
(74) Representative: Illingworth-Law, William Illingworth

(57) **Abstract**

A compressor vane (62) can comprise at least one of four leakage control structures comprising a leading edge axial stack (160) near the root (128) of the vane (62), a portion (150) ofthe inner platform (132) of an inner band (86) extending forward and having a radiused geometry, a negative dihedral (210) shape to the airfoil body along the leading edge (120) and adjacent the root (128), and a trailing edge axial stack (170) for at least a portion of the trailing edge (122) ofthe vane (62) near the root (128). These leakage control structures increase operating efficiency ofthe turbine (10) where the efficiency is normally decreased due to leakage flow (96) from higher pressure stages of the compressor (22) to lower pressure stages.

## Description

### BACKGROUND OF THE INVENTION

Turbine engines, and particularly gas or combustion turbine engines, are rotary engines that extract energy from a flow of combusted gases passing through the engine onto a multitude of rotating turbine blades. Gas turbine engines have been used for land and nautical locomotion and power generation, but are most commonly used for aeronautical applications such as for aircraft, including helicopters. In aircraft, gas turbine engines are used for propulsion of the aircraft. In terrestrial applications, turbine engines are often used for power generation.

Gas turbine engines for aircraft are comprised of compressor stages designed with a plurality of bands of blades rotated by a rotor and bands of static vanes disposed between the blades. The compressor stages compress the air that is then moved to a combustor and a turbine. The compressor vanes are disposed adjacent to seals, limiting airflow leakage to upstream areas of the compressor, which can reduce efficiency of the system. However, the seals tend to allow a small volume of air to leak forward. The leakage generates entropy within the compressor, reducing efficiency.

### BRIEF DESCRIPTION OF THE INVENTION

A compressor vane assembly for a gas turbine engine comprising a vane having an airfoil body extending chord-wise from a leading edge to a trailing edge and extending span-wise from a root to a tip and an inner platform secured to the root. The vane assembly has at least one of the four following leakage flow control structures: (1) a portion of the inner platform extending forward from the leading edge at the root by less than 15% of a span of the airfoil body, (2) a negative dihedral at leading edge at the root of the airfoil body, (3) a trailing edge axial stack extending aft as the trailing edge radially extends from the root, and (4) a leading edge axial stack extending aft as the leading edge radially extends from the root.

A method of controlling seal leakage flow about a gas turbine engine compressor vane assembly comprising a vane having a root secured to an inner platform, the method comprising aerodynamically directing the leakage flow along the inner platform.

### BRIEF DESCRIPTION OF THE DRAWINGS

In the drawings:
FIG. 1 is a schematic cross-sectional diagram of a gas turbine engine for an aircraft.
FIG. 2 is a cross-sectional view of a compressor section of FIG. 1.
FIG. 3 is a schematic view of one compressor vane of FIG. 2.
FIG. 4 is a schematic view of an axial stack of a leading and trailing edge, and a forward radiused platform overhang of the vane of FIG. 3.
FIG. 5 is a plot illustrating the position for a trailing edge axial stack along the span of the vane.
FIG. 6 is a plot illustrating angles for the trailing edge axial stack of FIG. 5 along the vane span.
FIG. 7 is a plot illustrating the position for a leading edge axial stack along the span of the vane.
FIG. 8 is a plot illustrating angles for a leading edge axial stack of FIG. 7 along the span of the vane.
FIG. 9 is a top view of the compressor vane of FIG. 3 illustrating a vane dihedral.
FIG. 10 is a bottom perspective view of the vane of FIG. 3 illustrating the dihedral of FIG. 9.
FIG. 11 is a plot illustrating a leading edge dihedral along a span of the vane of FIG. 9.

### DESCRIPTION OF EMBODIMENTS OF THE INVENTION

The described embodiments of the present invention are directed to a compressor vane. For purposes of illustration, the present invention will be described with respect to a compressor vane for an aircraft gas turbine engine. It will be understood, however, that the invention is not so limited and can have general applicability in non-aircraft applications, such as other mobile applications and non-mobile industrial, commercial, and residential applications. It can also have application to airfoils, other than a stationary vane, in a turbine engine, such as variable vanes.

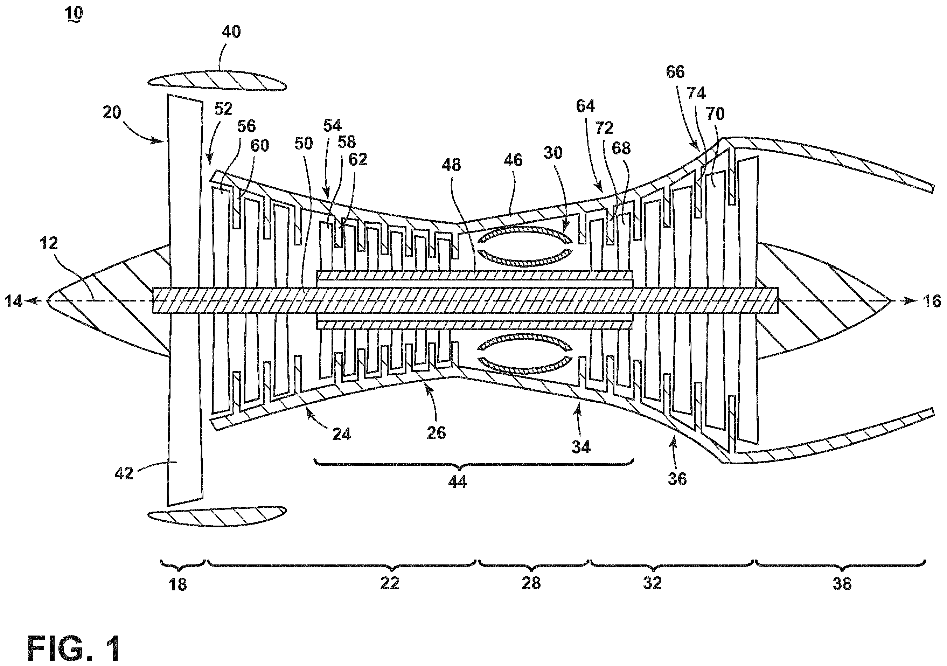

FIG. 1 is a schematic cross-sectional diagram of a gas turbine engine 10 for an aircraft. The engine 10 has a generally longitudinally extending axis or centerline 12 extending forward 14 to aft 16. The engine 10 includes, in downstream serial flow relationship, a fan section 18 including a fan 20, a compressor section 22 including a booster or low pressure (LP) compressor 24 and a high pressure (HP) compressor 26, a combustion section 28 including a combustor 30, a turbine section 32 including a HP turbine 34, and a LP turbine 36, and an exhaust section 38.

The fan section 18 includes a fan casing 40 surrounding the fan 20. The fan 20 includes a plurality of fan blades 42 disposed radially about the centerline 12. The HP compressor 26, the combustor 30, and the HP turbine 34 form a core 44 of the engine 10, which generates combustion gases. The core 44 is surrounded by core casing 46, which can be coupled with the fan casing 40.

A HP shaft or spool 48 disposed coaxially about the centerline 12 of the engine 10 drivingly connects the HP turbine 34 to the HP compressor 26. A LP shaft or spool 50, which is disposed coaxially about the centerline 12 of the engine 10 within the larger diameter annular HP spool 48, drivingly connects the LP turbine 36 to the LP compressor 24 and fan 20.

The LP compressor 24 and the HP compressor 26 respectively include a plurality of compressor spools 52, 54, in which a set of compressor blades 56, 58 rotate relative to a corresponding set of static compressor vanes 60, 62 to compress or pressurize the stream of fluid passing through the stages. Multiple compressor blades 56, 58 can be provided in a ring and can extend radially outwardly relative to the centerline 12, from a blade platform to a blade tip, while the corresponding static compressor vanes 60, 62 are positioned downstream of and adjacent to the rotating blades 56, 58. It is noted that the number of blades, vanes, and compressor stages shown in FIG. 1 were selected for illustrative purposes only, and that other numbers are possible.

The HP turbine 34 and the LP turbine 36 respectively include a plurality of turbine stages 64, 66, in which a set of turbine blades 68, 70 are rotated relative to a corresponding set of static turbine vanes 72, 74 (also called a nozzle) to extract energy from the stream of fluid passing through the stage. In a single turbine stage 64, 66, multiple turbine blades 68, 70 can be provided in a ring and can extend radially outwardly relative to the centerline 12, from a blade platform to a blade tip, while the corresponding static turbine vanes 72, 74 are positioned upstream of and adjacent to the rotating blades 68, 70. It is noted that the number of blades, vanes, and turbine stages shown in FIG. 1 were selected for illustrative purposes only, and that other numbers are possible.

In operation, the rotating fan 20 supplies air to the LP compressor 24, which then supplies pressurized air to the HP compressor 26, which further pressurizes the air. The pressurized air from the HP compressor 26 is mixed with fuel in the combustor 30 and ignited, thereby generating combustion gases. Some work is extracted from these gases by the HP turbine 34, which drives the HP compressor 26. The HP turbine exit gases are discharged into the LP turbine 36, which extracts additional work to drive the LP spool 50 to rotate the fan 20 and the LP compressor 24. The exhaust gas is ultimately discharged from the engine 10 via the exhaust section 38.

Some of the ambient air supplied by the fan 20 can bypass the engine core 44 and be used for cooling of portions, especially hot portions, of the engine 10, and/or used to cool or power other aspects of the aircraft. In the context of a turbine engine, the hot portions of the engine are normally downstream of the combustor 30, especially the turbine section 32, with the HP turbine 34 being the hottest portion as it is directly downstream of the combustion section 28. Other sources of cooling fluid can be, but are not limited to, fluid discharged from the LP compressor 24 or the HP compressor 26.

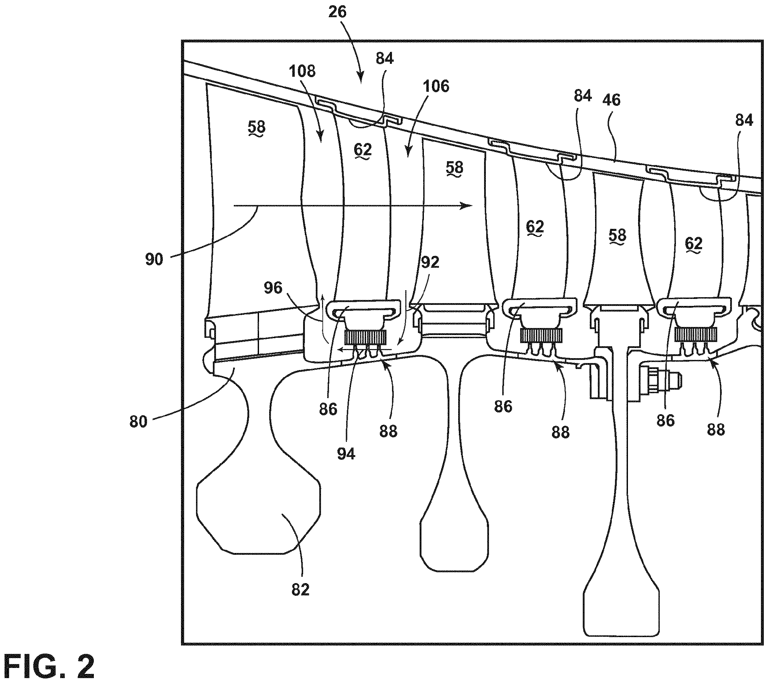

FIG. 2 shows the HP compressor section 26 of FIG. 1 comprising a plurality of compressor blades 58 and compressor vanes 62. Each combination of one ring of blades 58 and one ring of vanes 62 can comprise a compressor stage. Each blade 58 mounts to a rotor 80 for supporting the blades 58 that further mounts to a disk 82. The rotor 80 is annular relative to the centerline 12 of the engine 10, such that a plurality of blades 58 can be disposed around rotor 80. The rotor 80 can rotate about the centerline 12, such that the blades 58 rotate radially around the centerline 12.

The vanes 62 can mount to the core casing 46, being radially disposed around the engine centerline 12 similar to the blades 58. The vanes 62 can mount to the core casing 46 at an outer band 84 and can mount to an inner band 86 opposite of the outer band 84. A seal 88 can mount to the disks 82 adjacent to the inner band 86, such that airflow leakage is retarded from moving from downstream of the vanes 62 to upstream of the vanes 62. A mainstream airflow 90 moves in a forward to aft direction through the HP compressor 26. As such, the mainstream airflow 90 can define a downstream area 106 and an upstream area 108 relative to the vane 62, respective to a position aft and forward of the vane 62. Some of the mainstream airflow 90 can leak through the seals in a direction opposite of the mainstream airflow 90, with the seals 88 preventing much of the upstream airflow leakage.

An airflow path can be defined between the downstream area 106 of the vane 62 and the upstream area 108 of the vane 62 relative to the mainstream airflow 90. The downstream area 106 has a higher pressure relative to the upstream area 108 of the compressor section 26. At 92, compressed air in the downstream area 106 of the vane 62 can move between the inner band 86 and the rotor 80, adjacent the seal 88. At 94, the compressed airflow 92 can leak through the seal 88, moving toward the upstream area 108. At 96, the flow from 94 can leak back into the upstream area 108 and must reintegrate with the mainstream airflow 90.

The leakage flow 96 reduces efficiency of the engine 10 by allowing the compressed air from the downstream area 106 of the vane 62 to travel to the upstream area 108 of the vane 62. As the leakage flow 96 re-enters the upstream area 108 of the vane 62, it comprises a smaller velocity and poorly re-integrates with the mainstream airflow 90, further reducing the overall pressure of the compressor section 26. The differences in pressure, between a static and dynamic pressure, and the temperature differences from the windage energy addition to the leakage flow 96 resultant from friction of the rotational structure 80, 88, reduces efficiency.

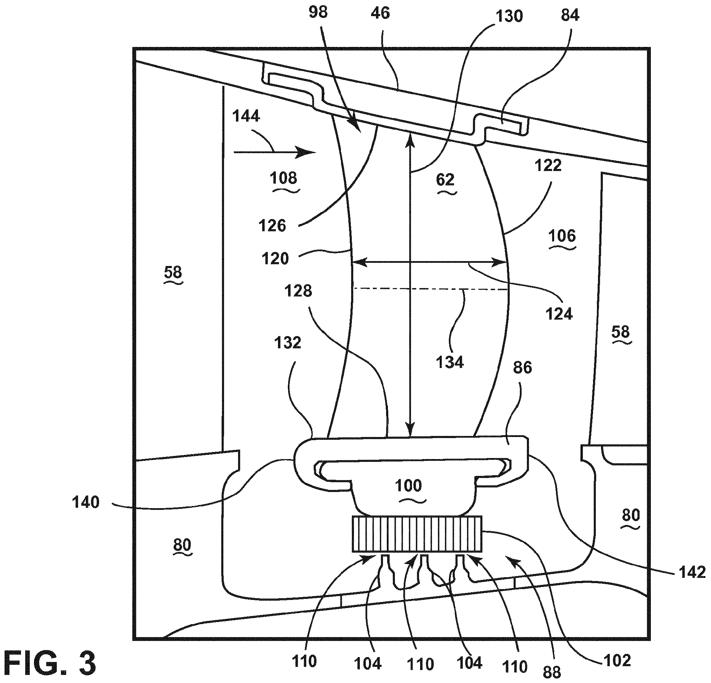

Turning now to FIG. 3, a view of a vane assembly 98 for mounting the vane 62 within the compressor stage of FIG. 2 is shown. The vane assembly 98 can comprise the vane 62, a lower member 100, a rub element 102, and a plurality of seal teeth 104. The vane 62 can comprise an airfoil body having a chord, camber, and other elements typical to an airfoil. The lower member 100 can be a hollow member, mounting to the radially inner surface of the inner band 86. The seal 88 includes a rub element 102 mounted to the lower member 100 and a plurality of seal teeth 104 disposed adjacent to rub element 102. The seal teeth 104 rotate with the rotors 80 and disks 82 of the blades 58. The seal teeth 104 can be slightly spaced from the rub element 102 such that a space 110 is disposed between the radial extent of the seal teeth 104 and the rub element 102. The combination of the rub element 102 and the seal teeth 104 define a labyrinth seal to frustrate the leakage airflow. However, the space 110 can permit a volume of air to flow between the seal teeth 104 and the rub element 102.

The vane 62 can further comprise a leading edge 120 and a trailing edge 122, adjacent to the upstream area 108 and the downstream area 106, respectively. The vane 62 can further define an axial chord 124 extending between the leading edge 120 and the trailing edge 122 in a chord-wise direction. A tip 126 and a root 128 of the vane 62 are adjacent to the outer band 84 and the inner band 86, respectively, further defining a span 130 extending from the root 128 to the tip 126 in a span-wise direction. The inner band 86 can further comprise an inner platform 132 and the lower member 100. The vane 62 can mount to the platform 132 adjacent the root 128. A midline 134 is defined as the axial chord 124 through the midpoint of the span 130.

The platform 132 can comprise a nose 140 and a tail 142, being disposed forward and aft of the vane 62, respectively, relative to the mainstream airflow 90. The nose 140 can further comprise a circular or arcuate geometry, having a radiused surface.

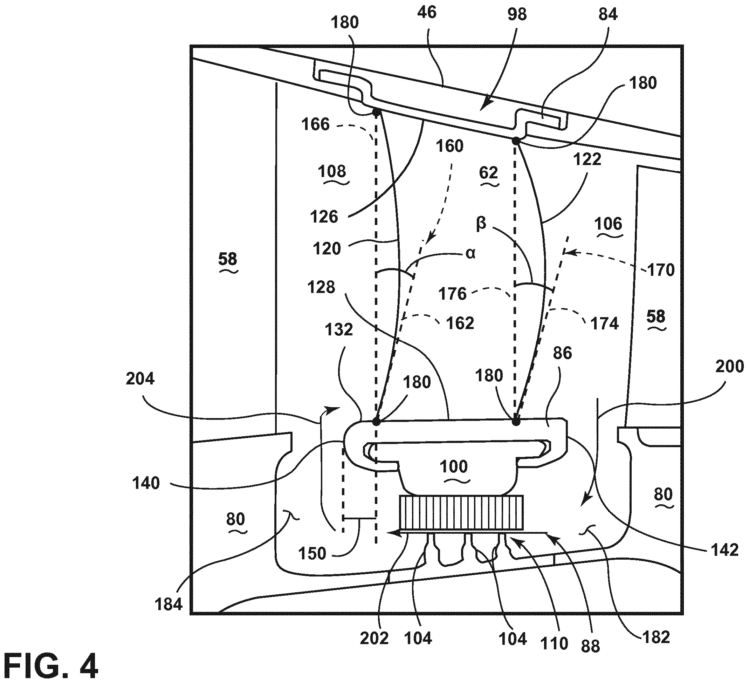

Turning now to FIG. 4, the arcuate nose 140 of the inner platform 132 can extend forward of the leading edge 120 at the root 128 by a portion 150. The length of the portion 150, for example, can be defined relative to the span-wise length of the vane 62. For example, the length of the portion 150 of the nose 140 can be less than 15% of the span-wise length of the airfoil vane 62.

The leading edge 120 can further comprise a leading edge axial stack 160 for at least a portion of the leading edge 120 near the root 128. The leading edge stack 160 extends from the root 128, comprising an angular deviation as a longitudinal axis 162 defined by the leading edge 120 extending from the root 128. The leading edge axial stack 160 can further define a first angle α as the angle of the longitudinal axis 162 relative to a radial axis 166 extending radially from the engine centerline 12 through the leading edge 120 at the root 128. The vane 62 at the leading edge 120 has a concave shape relative to the upstream area 108 defined by the leading edge axial stack 160, such that the leading edge 120 at the root 128 and the tip 126 are substantially orthogonal relative to and intersecting the radial axis 166.

The trailing edge 122 can further comprise a trailing edge axial stack 170 for at least a portion of the trailing edge 122 near the root 128. Similar to the leading edge axial stack 160, the trailing edge axial stack 170 can extend from the root 128, comprising an angular deviation of the trailing edge 122 similar to the leading edge 120, such that a second angle β is defined between a trailing edge axial stack axis 174 and a radial axis 176 extending from the engine centerline 12. The trailing edge 122 can define a convex shape, relative to the downstream area 106, such that the trailing edge 122 at the root 128 and tip 126 are radially aligned.

The first angle α and the second angle β can be identical, or similar, such that the leading edge axial stack 160 and the trailing edge axial stack 170 can be geometrically identical or similar. The angles α, β can be greater than 5 degrees at the root 128.

Furthermore, the leading edge 120 and the trailing edge 122 at the tip 126 and at the root 128 can be substantially orthogonal, such that a set of four junctions 180 defined at the intersections between the leading edge 120, the trailing edge 122, the tip 126, and the root 128 are disposed in radial alignment relative to one another, for a compact design for the vane 62.

The arcuate, radiused shape of the nose 140 permits the leakage flow 96 to turn around the arcuate surface, and have a smoother transition back into the mainstream airflow 90, passing along the platform 132 and the area of the vane 62 adjacent the root 128.

It should be appreciated that the leading edge axial stack tends to reduce the lift of the vane 62 near the root leading edge, which assists in maintaining a high suction side static pressure, reducing the tendency for the leakage flow to be drawn onto the suction side. It should be further appreciated that the trailing edge axial stack moves the midline 134 of the vane 62 further downstream of the root 128 and the tip 126.

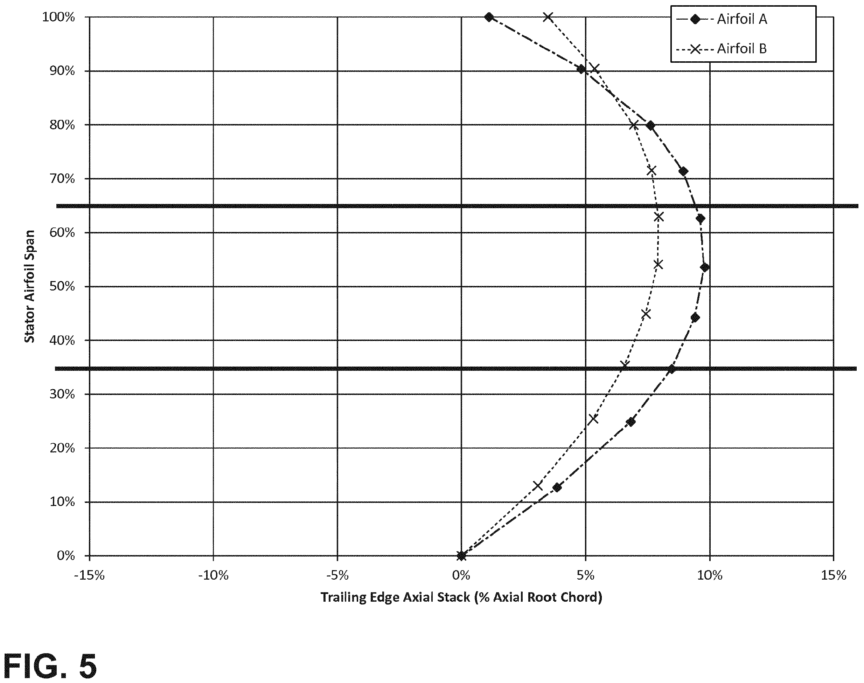

Turning to FIG. 5, a first plot illustrates the geometrical shape of the trailing edge axial stack represented by two stators, Airfoil A and Airfoil B, along the compressor section in axial fashion, representing two potential stages. Airfoil A and Airfoil B are exemplary airfoils and it should be understood that variation of the airfoils as illustrated in the plots are contemplated within the scope of this disclosure. The trailing edge axial stack moves in the aft direction, represented by a percentage of the axial root chord determined based upon the chord-wise distance at the root. The axial position of the trailing edge 122 initially moves in an aft direction and transitions to a forward axial position represented by the negative values for the trailing edge axial stack. The greatest aft position of the trailing edge 122 can be above about 35% of the span and below about 65% and can be between 4% and 10% of the axial chord aft of the trailing edge 122 at the root 128.

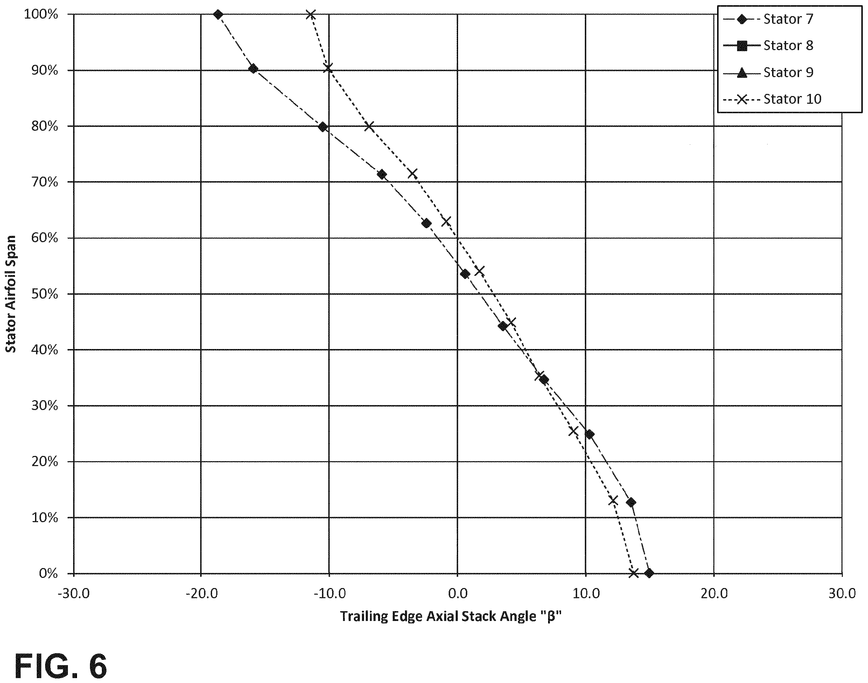

In FIG. 6, a second plot illustrates the same two stators as FIG. 5, illustrating the axial stack angle β for the trailing edge 122 of FIG. 4. The trailing edge axial stack comprises a positive angle, defining a positive slope until between 50% and 60% of the span of Airfoil A and Airfoil B. The trailing edge axial stack angle at the root can be more than 5-degrees from 0% to 40% of the span or more than 10-degrees from 0% to 20% of the span, or both. Furthermore, the angles and slopes for the trailing edge can differ among stages.

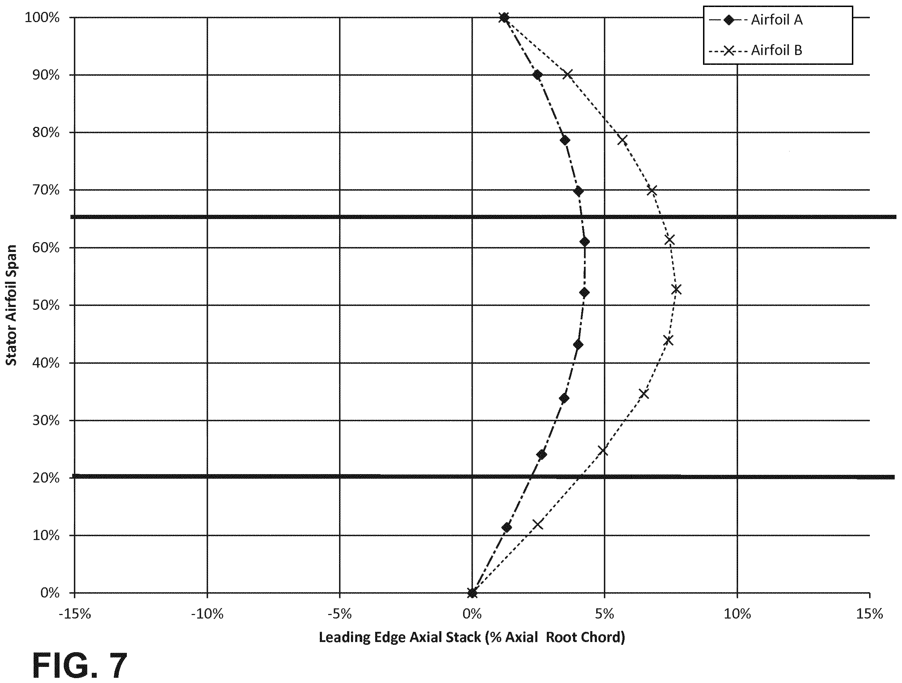

Turning to FIG. 7, a third plot illustrates an exemplary geometrical shape of the leading edge axial stack for Airfoil A and Airfoil B. The leading edge axial stack moves in the aft direction, represented by a percentage of the axial root chord determined based upon the chord-wise distance at the root, for the axial position of the leading edge 120 and transitions to a forward axial position represented by the negative values for the trailing edge axial stack. The maximum aft position for the leading edge 120 is located between about 20% and 65% of the span, varying between different vanes 62. The aft-most point of the leading edge axial stack can be radially within 65% of the leading edge span.

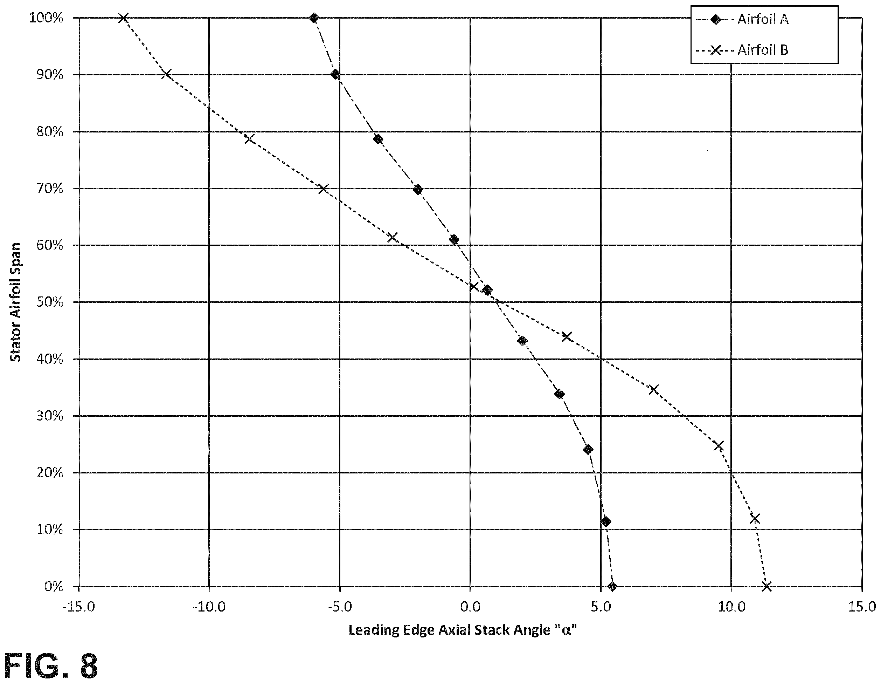

Turning to FIG. 8, a fourth plot illustrates the angle α for the leading edge axial stack, defined as the first angle α in FIG. 4 for Airfoils A and B. As can be appreciated, the angles for the airfoils initially have a positive slope defined by the positive angle. The leading edge axial stack angle at the root can be more than 5-degrees and positive from 0% to 50% span or more than 10-degrees from 0% to 20% of the span, or both. Similar to FIG. 6, the positive slopes adjacent to the root 128 tend to minimize the aerodynamic losses associated with the leakage flows. It should be understood that the initial positive slope of the leading edges 120 at the root 128 of the airfoils moving through the compressor section tends to maintain the leakage flow near the platform 132 and prevent intermixing of the leakage flow with the mainstream flow 90, which would otherwise minimize efficiency. Furthermore, it is contemplated that the angles and slopes for the leading edge can differ among stages.

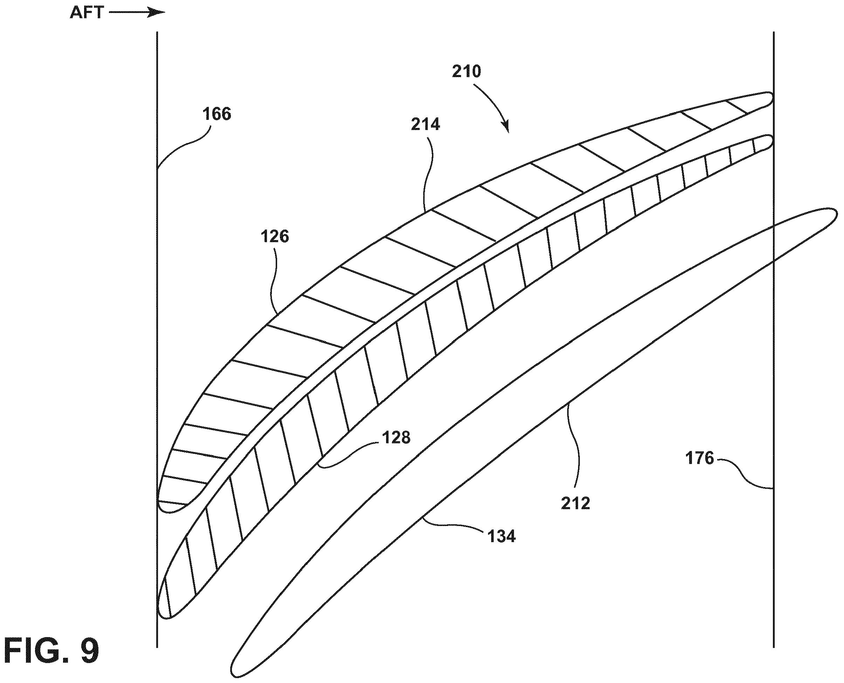

Turning to FIG. 9, a top view of the vane 62 of FIG. 3 best illustrates a dihedral airfoil shape 210 for the vane 62. FIG. 9 illustrates three cross-sections of the airfoil vane 62 taken at the root 128, the midline 134, and the tip 126. It should be understood that the top view of FIG. 9 is a radial view relative to the engine centerline 12. The airfoil shape of the vane 62 defines a pressure side 212 and a suction side 214 along the span 130 of the vane 62. A negative dihedral is defined between the root 128 and the midline 134, illustrated as the midline 134 being positioned below the root 128. A positive dihedral is defined from the midline 134 to the tip 126, illustrated as the tip 126 being positioned above the midline 134.

It should be appreciated that while the vane 62 is illustrated as having a negative dihedral at the root 128 for the leading edge 120 extending to the trailing edge 122, the vane 62 can have a negative dihedral at the root 128 for only the leading edge 120, while having none or a different dihedral at the trailing edge 122. Furthermore, while the dihedral is illustrated as consistent for both the leading and trailing edges 120, 122, the dihedrals at the edges 120, 122 can differ from one another.

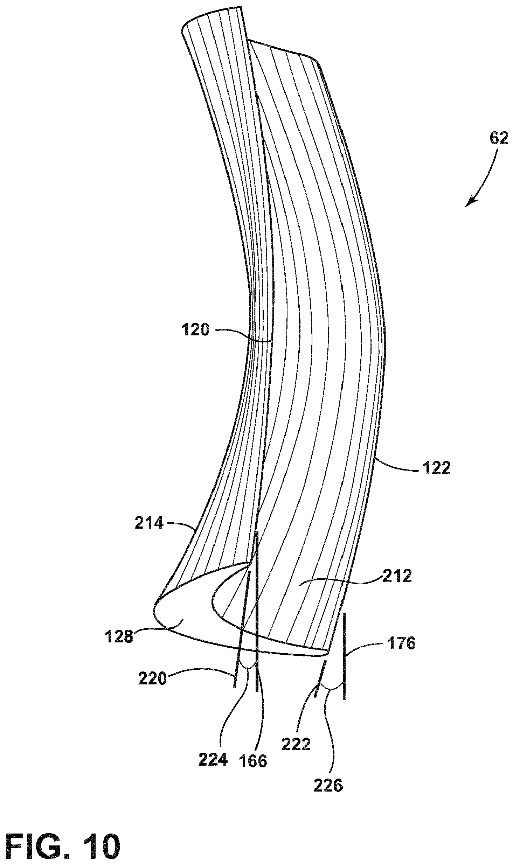

Turning to FIG. 10, a perspective view of the vane 62 illustrates the dihedral shape of the airfoil of FIG. 9 and is a bottom perspective view of the isolated vane 62, looking slightly radially outward relative to the engine centerline 12, having the platform removed for illustrative purposes. A leading edge axis 220 and a trailing edge axis 222 can be defined at the root 128 along the leading and trailing edges 120, 122 respectively. A leading edge negative dihedral angle 224 and a trailing edge negative dihedral angle 226 can be defined between the leading and trailing edge axes 220, 222 and the leading and trailing edge radial axes 166, 176, respectively.

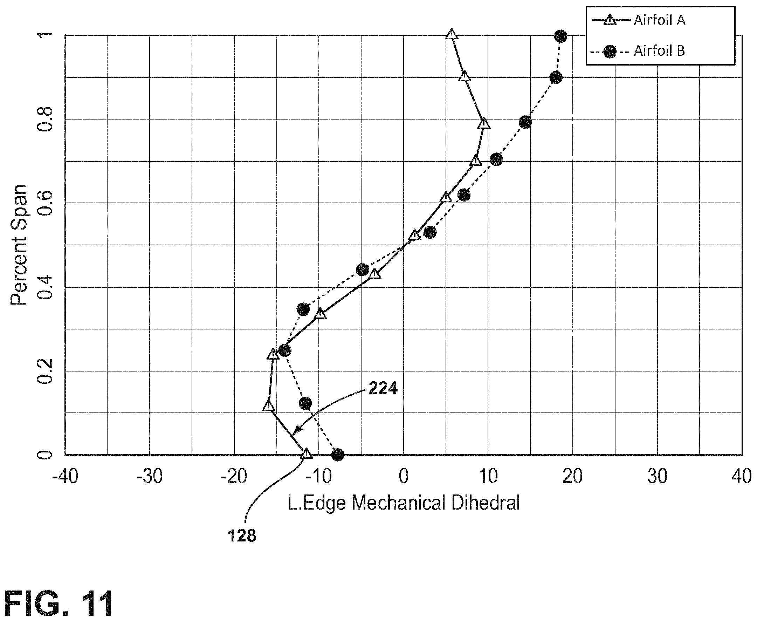

Turning to FIG. 11, a plot illustrates the leading edge mechanical dihedral for the exemplary airfoils, Airfoil A and Airfoil B, which can be the vane 62 of FIGS. 9 and 10. As can be understood, Airfoils A and B comprise the negative leading edge dihedral adjacent the root 128 at 0% span having the leading edge negative dihedral angle 224 at the root 128. The leading edge negative dihedral extends from the root along at least 20% of the airfoil body span. The negative dihedral shape reduces local high incidence and secondary flow effects caused by the inter-stage seal leakage flow 96, also increasing efficiency and stall margin. The leading edge negative dihedral angle 224 remains negative for about 50% of the span from the root. Furthermore, the leading edge negative dihedral has a maximum magnitude of more than 5-degrees and can have a magnitude of more than 10-degrees at the root 128.

It should be appreciated that the dihedral angle defining the curve of the vane 62 in a pressure-side-direction, adjacent the root 128, directs and maintains the leakage flow 96 adjacent the root 128 and the platform 132. Thus, the leakage flow 96 is prevented from migrating radially outward, where it can intermix with the mainstream airflow 90 tending to reduce engine efficiency. The negative dihedral also turns the leakage flow in the direction of the mainstream airflow 90. This tends to raise the static pressure near the leading edge root 128, tending to reduce the overall leakage flow 96. As such, the leakage flow 96 is hindered from moving radially outward to actively mix with the mainstream airflow 90, reducing pressure losses and turbulence generated by the leakage flow 96, increasing efficiency.

The leakage flow 96 can also be controlled by a method of controlling the seal leakage flow for a compressor vane assembly, which can comprise directing a leakage flow along the inner platform. The method of directing the leakage flow can comprise at least one of the following aerodynamic actions: (1) limiting the forward movement of the leakage flow in front of a leading edge of the vane to less than fifteen percent of the vane span, (2) capturing at least a portion of the leakage flow by a forward axial stack of the leading edge of the vane, (3) directing the leakage flow toward the inner platform with a negative dihedral on the leading edge of the vane at the root, and (4) stabilizing the flow at the root with a trailing edge axial stack to minimize local root trailing edge flow separation. Aerodynamically directing the leakage flow and improving the airfoil's root flow minimizes the detrimental efficiency impact of the leakage flow. The impact to the efficiency can be 1.5 points of adiabatic stage efficiency while it is contemplated that the adiabatic efficiency impact can be between 1 to 2 points. It should be understood that the method could implement one or more of the four aerodynamic actions in utilizing the method, comprising any combination of the four aerodynamic actions.

Traditional solutions for leakage flows in turbine engines have focused on limiting the leakage flow or preventing the leakage flow 96 from downstream to upstream of the vane 62, however, these solutions often increase overall system rigidity, increase overall complexity of the system, or fail to properly prevent the leakage flow from reducing the system pressure. The method described herein adopts a different approach of controlling the leakage flow 96 and gradually integrating the leakage flow 96 back into the mainstream airflow 90. Thus, the interference with the mainstream airflow 90 is minimized and the typical pressure losses are minimized as well.

It should be appreciated that the vane assembly can comprise an airfoil shaped vane. The vane can comprise one or more leakage control structures comprising an axial stack at the leading edge adjacent the root, an axial stack at the trailing edge adjacent the root, a negative dihedral shape to the airfoil body along the leading edge, and an arcuate overhang of the platform defined by the inner band, such that aerodynamic performance resultant to inter-stage seal clearance leakages is improved. The flow interaction between the leakage flow and the mainstream airflow are mitigated to minimized pressure losses across the vane airfoil associated with seal leakage.

The improved three-dimensional features described herein provide for improved aerodynamic performance, increase integration of a leakage flow into a mainstream airflow, and reduced incidence and secondary flow losses through the compressor. As such, overall efficiency of the engine and stall margins are increased.

This written description uses examples to disclose the invention, including the best mode, and to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

Various aspects and embodiments of the present invention are defined by the following numbered clauses:
1. A compressor vane assembly for a gas turbine engine comprising:
   a vane having an airfoil body extending chord-wise from a leading edge to a trailing edge and extending span-wise from a root to a tip; and
   an inner platform secured to the root;
   wherein the vane assembly has at least one of four leakage flow control structures comprising:
      a portion of the inner platform extending forward from the leading edge at the root by less than 15% of a span of the airfoil body,
      a negative dihedral at the leading edge at the root of the airfoil body,
      a trailing edge axial stack extending aft as the trailing edge radially extends from the root,
      a leading edge axial stack extending aft as the leading edge radially extends from the root.
2. The compressor vane assembly of clause 1 wherein the aft-most point of the trailing edge axial stack is above 35% and below 65% of the trailing edge span.
3. The compressor vane assembly of clause 1 or 2 wherein the aft-most point of the trailing edge axial stack is between 4% and 10% of the axial chord aft of the trailing edge at the root.
4. The compressor vane assembly of any preceding clause wherein the aft-most point of the leading edge axial stack is radially within 65% of the leading edge span.
5. The compressor vane assembly of any preceding clause wherein the compressor vane assembly has any two of the four leakage flow control structures.
6. The compressor vane assembly of any preceding clause wherein the compressor vane assembly has any three of the four leakage flow control structures.
7. The compressor vane assembly of any preceding clause wherein the compressor vane assembly has all four of the four leakage flow control structures.
8. The compressor vane assembly of any preceding clause wherein an angle of the axial stack at the trailing edge at the root is more than 5 degrees from 0 to 40 % span.
9. The compressor vane assembly of any preceding clause wherein the angle of the axial stack at the trailing edge at the root is more than 10 degrees from 0 to 20% span.
10. The compressor vane assembly of any preceding clause wherein an angle of the axial stack at the leading edge at the root is more than 5 degrees and positive from 0 to 50% span.
11. The compressor vane assembly of any preceding clause wherein the angle of the axial stack at the leading edge at the root is more than 10 degrees from 0 to 20% span.
12. The compressor vane assembly of any preceding clause wherein the portion of the inner platform is less than 10% of the span of the airfoil body.
13. The compressor vane assembly of any preceding clause wherein the airfoil has a negative dihedral at the root extending from the leading edge to the trailing edge.
14. The compressor vane assembly of any preceding clause wherein the leading edge negative dihedral extends from the root along at least 20% of the airfoil body span.
15. The compressor vane assembly of any preceding clause wherein the leading edge dihedral remains negative for about 50% of the span from the root.
16. The compressor vane assembly of any preceding clause wherein the leading edge negative dihedral has a maximum magnitude of more than 5 degrees.
17. The compressor vane assembly of any preceding clause wherein the root leading edge negative dihedral has a magnitude of more than 10 degrees.
18. The compressor vane assembly of any preceding clause wherein the leading edge negative dihedral initially becomes more negative extending from the root.
19. A method of controlling seal leakage flow around a gas turbine engine compressor vane assembly comprising a vane having a root secured to an inner platform, the method comprising aerodynamically directing a leakage flow along the inner platform.
20. The method of clause 19 wherein aerodynamically directing the leakage flow minimizes a detrimental efficiency impact of the leakage flow to between 1 - 2 points of adiabatic stage efficiency.
21. The method of clause 19 or clause 20 wherein the aerodynamically directing the leakage flow comprises any one of four aerodynamic actions comprising:
   limiting an axial travel of the leakage flow in front of a leading edge of the vane to less than 15% of a vane span,
   capturing at least a portion of the leakage flow by an axial stack aft of the leading edge of the vane at the root,
   directing the leakage flow toward the inner platform with a negative dihedral on the leading edge of the vane at the root, and
   stabilizing the flow at the root with a trailing edge axial stack to minimize local root trailing edge flow separation.
22. The method of any of clauses 19 to 21 comprising any two of the four aerodynamic actions.
23. The method of any of clauses 19 to 22 comprising any three of the four aerodynamic actions.
24. The method of any of clauses 19 to 23 comprising all four of the four aerodynamic actions.

## Claims

1. A compressor vane assembly (98) for a gas turbine engine (10) comprising:
a vane (62) having an airfoil body extending chord-wise from a leading edge (120) to a trailing edge (122) and extending span-wise from a root (128) to a tip (126); and
an inner platform (132) secured to the root (128);
wherein the vane assembly (98) has at least one of four leakage flow control structures comprising:
a portion (150) of the inner platform (132) extending forward from the leading edge (120) at the root (128) by less than 15% of a span (130) of the airfoil body,
a negative dihedral (210) at the leading edge (120) at the root (128) of the airfoil body,
a trailing edge axial stack (170) extending aft (16) as the trailing edge (122) radially extends from the root (128),
a leading edge axial stack (160) extending aft (16) as the leading edge (120) radially extends from the root (128).

2. The compressor vane assembly (98) of claim 1 wherein the aft-most point of the trailing edge axial stack (170) is above 35% and below 65% of the trailing edge span (130).

3. The compressor vane assembly (98) of claim 1 or claim 2, wherein the aft-most point of the leading edge axial stack (160) is radially within 65% of the leading edge span (130).

4. The compressor vane assembly (98) of any preceding claim, wherein the compressor vane assembly (98) has any two of the four leakage flow control structures.

5. The compressor vane assembly (98) of any preceding claim, wherein the compressor vane assembly (98) has any three of the four leakage flow control structures.

6. The compressor vane assembly (98) of any preceding claim, wherein the compressor vane assembly (98) has all four of the four leakage flow control structures.

7. The compressor vane assembly (98) of any preceding claim, wherein an angle (β) of the axial stack (170) at the trailing edge (122) at the root (128) is more than 5 degrees from 0 to 40 % span (130).

8. The compressor vane assembly (98) of any preceding claim, wherein an angle (α) of the axial stack (160) at the leading edge (120) at the root (128) is more than 5 degrees and positive from 0 to 50% span (130).

9. The compressor vane assembly (98) of any preceding claim, wherein the portion (150) of the inner platform (132) is less than 10% of the span (130) of the airfoil body.

10. The compressor vane assembly (98) of any preceding claim, wherein the leading edge negative dihedral (210) extends from the root (128) along at least 20% of the airfoil body span (130).

11. A method of controlling seal leakage flow around a gas turbine engine compressor vane assembly comprising a vane having a root secured to an inner platform, the method comprising aerodynamically directing a leakage flow along the inner platform.

12. The method of claim 11 wherein aerodynamically directing the leakage flow minimizes a detrimental efficiency impact of the leakage flow to between 1 - 2 points of adiabatic stage efficiency.

13. The method of claim 11 or claim 12 wherein the aerodynamically directing the leakage flow comprises any one of four aerodynamic actions comprising:
limiting an axial travel of the leakage flow in front of a leading edge of the vane to less than 15% of a vane span,
capturing at least a portion of the leakage flow by an axial stack aft of the leading edge of the vane at the root,
directing the leakage flow toward the inner platform with a negative dihedral on the leading edge of the vane at the root, and
stabilizing the flow at the root with a trailing edge axial stack to minimize local root trailing edge flow separation.

14. The method of any of claims 11 to 13 comprising any two of the four aerodynamic actions.

15. The method of any of claims 11 to 14 comprising any three of the four aerodynamic actions.
